# EUROPÄISCHE PATENTSCHRIFT

(11) **EP 0 648 804 B1**
(45) Veröffentlichungstag und Bekanntmachung des Hinweises auf die Patenterteilung: **30.12.1998**
(21) Anmeldenummer: 94116042.6
(22) Anmeldetag: 12.10.1994
(51) Int. Cl.: C08J 11/06, B29B 17/00

(54) **Verfahren zum Herstellen von SMC-Masse**
Process for producing sheet moulding compounds (S.M.C.)
Procédé pour la fabrication de compositions de moulage en forme de feuille (S.M.C.)

(30) Priorität: 14.10.1993 DE 4335054
(43) Veröffentlichungstag der Anmeldung: 19.04.1995
(73) Patentinhaber: Menzolit-Fibron GmbH, 75015 Bretten (DE)
(72) Erfinder: Ehnert, Gert, D-76694 Forst (DE); Bieniek, Klaus, D-76703 Kraichtal-Me. (DE); Steinbach, Karin, D-75015 Bretten-Neibsheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 443 051
- EP-A- 0 517 175
- DE-A- 4 120 191

## Beschreibung

Die Erfindung betrifft ein Verfahren zum Herstellen einer SMC-Formmasse nach dem Oberbegriff des Anspruchs 1.

Der Zusatz von Recyclat, insbesondere SMC- oder BMC-Recyclat (Sheet-Moulding-Compounds bzw. Bulk-Moulding-Compounds) als zerkleinerte Altkunststoffteile, zum Harzfüllstoffgemisch bzw. zur Harzpaste zur Herstellung einer SMC-Masse, mittels der nach Zusatz von Verstärkungsfasern faserverstärkte Duroplastteile hergestellt werden, wirft besondere Probleme auf: Die Recyclatpartikel weisen durch den Zerkleinerungsvorgang, nämlich ein Mahlen, insbesondere durch eine Hammermühle, eine Vielzahl von Mikrorissen auf.

Wenn das unbehandelte Recyclat direkt mit dem Harzfüllstoffgemisch bzw. der Harzpaste vermischt wird, so dringen in der Harzpaste enthaltene flüssige Komponenten in die Mikrorisse ein, werden in diesen adsorbiert, was zu einer Viskositätserhöhung der SMC-Masse führt. Es erfolgt also eine physikalische Eindickung, die darüber hinaus über einen längeren Zeitraum fortschreiten kann, so daß die Viskosität des Gesamtgemisches sich mit der Zeit verändert. Um noch eine vertretbare Viskosität der hergestellten Paste für die Tränkung von Verstärkungsfasern, wie Glasfasern, zu erhalten, muß die Zugabe von Recyclat zum Harzfüllstoffgemisch auf etwa 10 bis 15 % begrenzt werden.

Nachteilig ist also, daß nur ein geringer Recyclatanteil als Verstärkungs- und Füllmaterial verwendet werden kann, daß durch die Verwendung von Recyclat die Viskosität des Harzfüllstoffgemisches auf nicht steuerbare Weise erhöht wird und im übrigen über die Zeit nicht konstant bleibt, sondern sich verändert.

Die gattungsgemäße EP 517 175 A1 betrifft ein Verfahren zur Wiederverwertung von zerkleinerten Altteilen und Abfällen von faserverstärkten, vernetzten, duroplastischen Kunststoffen (SMC- und BMC-Teilen). Hierzu werden die Teile zunächst grob zerkleinert und anschließend naß vermahlen, wozu entweder eine sehr feuchte Schlämmung durch Zugabe von flüssigem, härtbarem Kunstharz vorzusehen ist oder aber eine inerte Flüssigkeit, wie Wasser, zugesetzt wird, wonach eine erneute Trocknung erfolgt. Nach dem Naßvermahlen wird das Mahlgut mit weiterem Harz und den üblichen Zusatzstoffen vermischt und eine Masse geschaffen, die nach dem BMC- oder dem SMC-Verfahren weiterverarbeitet werden kann. Wird eine inerte Flüssigkeit wie Wasser zu einer Vermahlung eingesetzt, so ergeben sich die bereits genannten Nachteile. Wird durch die Verwendung von flüssigem Kunstharz eine zähe Flüssigkeit oder Schlämmung zur Naßvermahlung erzeugt, so wird hierdurch die Weiterverarbeitung nach dem Vermahlen erschwert, da das Material schlecht mit den weiteren Harzfüllstoffen vermischt werden kann und vielmehr sogar Agglomerationen auftreten, wodurch die Rieselfähigkeit nicht mehr gegeben ist.

Die DE-OS 41 20 191 betrifft ein Verfahren zum Entfernen von Styrol aus styrolhaltiger Luft, wobei styrolhaltige Luft durch ein Haufwerk von teilchenförmigen Zuschlagstoffen für SMC- oder BMC-Massen geleitet, das Styrol an den Zuschlagstoffen adsorbiert bzw. in ihnen gelöst und dann die mit Styrol beladenen Zuschlagstoffe SMC- oder BMC-Massen beigemischt und diese ausgehärtet werden. Das Aktivierungsmittel wird also in gas- bzw. dampf förmigem Zustand zugesetzt. Ziel ist dabei die Reinigung von Luft durch das Entfernen des Styrols aus dieser.

Der Erfindung liegt daher die Aufgabe zugrunde, ausgehend von dem genannten Stand der Technik ein Verfahren zum Herstellen einer verarbeitungsfähigen SMC-Masse zu schaffen, die einen hohen Recyclatanteil aufweisen kann, bei der Weiterverarbeitung keiner Viskositätsänderung unterliegt, bei der vielmehr die Viskosität daher genau eingestellt werden kann.

Erfindungsgemäß wird die genannte Aufgabe bei einem Verfahren der eingangs genannten Art dadurch gelöst, daß das Recyclat benetzt wird, bis alle von außen zugänglichen Mikrorisse der Recyclatpartikel mit dem Aktivierungsmittel gefüllt sind, und nur soviel Aktivierungsmittel zugegeben wird, daß die Rieselfähigkeit des benetzten Recyclats erhalten bleibt. Dadurch, daß dem Recyclat die Aktivierungsmittel separat zugegeben werden, werden die nach dem Verkleinerungsvorgang im Recyclat enthaltenen Mikrorisse durch das Aktivierungsmittel ausgefüllt. Hierdurch wird verhindert, daß beim Mischem mit dem Harzfüllstoffgemisch Rezepturkomponenten der Harzpaste in die Mikrorisse eindringen und hierdurch wiederum eine Erhöhung der Viskosität des Harzfüllstoffgemisches erfolgt. Damit insbesondere die Viskositätsänderung tatsächlich zuverlässig ausgeschlossen wird, wird das Recyclat benetzt, bis alle von außen zugänglichen Mikrorisse der Recyclatpartikel mit dem Aktivierungsmittel gefüllt sind.

Als übliche Harze bei der BMC-/SMC-Herstellung kommen ungesättigte Polyester- (UP-)Harze, Vinylester- (VE-)Harze, ungesättigte Hybridharze, Thermoplastlösungen oder dergleichen, als Füllstoff z.B. Calciumcarbonat (CaCO₃) und als Additive Peroxide, Pigmente, Inhibitoren in Frage. Erfindungsgemäß als Aktivierungsmittel einzusetzende Monomere sind insbesondere Styrol, Diallylphthalat (DAP), Styrolderivate, Acrylate oder dergleichen, Polymere sind ungesättigte Polyester, Vinylester, Thermoplastlösungen oder dergleichen.

Um das benetzte oder mittels des genannten Aktivierungsmittels aktivierte Recyclat gut in das Harzfüllstoffgemisch bzw. die Harzpaste einmischen zu können, wird nur soviel Aktivierungsmittel zugegeben, daß die Rieselfähigkeit des benetzten Recyclats erhalten bleibt. Zum einen läßt sich bei Erhaltung der Rieselfähigkeit das aktivierte Recyclat im Anschluß problemlos mit dem Harzfüllstoffgemisch vermischen. Agglomerationen treten nicht auf. Zum anderen füllt dadurch, daß keine pastenartige Mischung aus Recyclat und Aktivierungsmitteln hergestellt ist, der überwiegende Teil des Aktivierungsmittels die Mikrorisse aus und befindet sich damit innerhalb der Recyclatpartikel. Damit wird z.B. die Monomerkonzentration in dem Harzfüllstoffgemisch durch den Monomeranteil im Aktivierungsmittel nur unwesentlich erhöht. Das Harzfüllstoffgemisch wird in seinen Eigenschaften und seinem Reaktionsverhalten demgemäß nicht negativ beeinflußt.

Eine hinreichende Benetzung oder Aktivierung des Recyclats wird in bevorzugter Weise dadurch erreicht, daß auf 100 Volumenteile fein- bis grobkörnigen Recyclats 5 bis 150, vorzugsweise zwischen 50 und 100 Volumenteile Aktivierungsmittel zugegeben werden, wobei insbesondere auf 100 Volumenteile Recyclat nicht mehr als 75 Volumenteile Aktivierungsmittel zugegeben werden. Es hat sich herausgestellt, daß bei einem solchen Verhältnis von Rohrecyclat und Aktivierungsmittel einerseits die Mikrorisse vollständig ausgefüllt sind, so daß eine nachträgliche Viskositätsänderung der SMC-Masse nach Zugabe des aktivierten Recyclats nicht mehr erfolgt, andererseits aber die Rieselfähigkeit des aktivierten Recyclats erhalten bleibt und damit eine gute Durchmischung desselben mit dem Harzfüllstoffgemisch möglich ist.

Die Recyclatpartikel können als Feinststaubanteile mit Partikelgrößen im Mikrometerbereich, aber auch als pulverförmige Recyclate bis hin zu fasrigen Recyclaten im Bereich mehrerer mm vorliegen. Der Volumenanteil des Aktivierungsmittels hängt dabei dann von der Fein- bzw. Grobkörnigkeit des Recyclats ab. Je nach Partikelgröße und dem damit verbundenen Absorptionsverhalten des Recyclats variiert unter Beachtung der Erhaltung der Rieselfähigkeit die Menge des Aktivierungsmittels. Bei einer Recyclatpartikelgröße < 80 µm z.B. beträgt der Aktivierungsmittelanteil bei 100 Volumenanteilen Recyclat maximal 75 Volumenanteile. Wird beispielsweise fasriges Recyclat mit faserhaltigen Bestandteilen in einer Größenordnung von 3 bis 6 mm verwendet, dann ergibt sich für die Aufrechterhaltung der Rieselfähigkeit ein Volumenanteil von 20 für das Aktivierungsmittel.

Obwohl auch größere Partikelgrößen des Recyclats eingesetzt werden können, wobei dann der Aktivierungsmittelanteil je nach Absorptionsvermögen des Recyclats unterschiedlich ist, sieht eine äußerst bevorzugte Ausgestaltung vor, daß Recyclate von Feinststaubgrößen im Mikrometerbereich über pulverförmige Recyclate bis zu Partikelgrößen von weniger als 0,25 mm eingesetzt werden. Es können aber auch fasrige Recyclate im Bereich mehrerer mm eingesetzt werden.

In bevorzugter erfindungsgemäßer Weise wird vorgesehen, daß der Recyclatanteil an der SMC-Masse mindestens 20 Gewichts-% beträgt, wobei insbesondere der Recyclatanteil an der SMC-Masse bis zu 60 Gewichts-% beträgt.

In weiterer bevorzugter Ausgestaltung ist vorgesehen, daß als Aktivierungsmittel Styrol verwendet wird. Hierdurch lassen sich die Produktionskosten verringern.

Durch das erfindungsgemäße Vorgehen, die Mikrorisse der Recyclatteilchen zunächst und vorab durch ein Aktivierungsmittel aus geeigneten Monomeren, wie z.B. Styrol, oder Polymeren, wie z.B. UP-Harzen, sowie Additiven, aber auch Härtern und Inhibitoren zu füllen und erst dann das derart aktivierte Recyclat in an sich üblicher Weise mit dem Harzfüllstoffgemisch zu vermischen, wird ein hinreichend niedriges Viskositätsniveau der dann erhaltenen Paste erzielt, das auch über die Zeitdauer der SMC-Herstellung keinen wesentlichen Veränderungen unterliegt. Das Aktivierungsmittel wird im Recyclat, d.h. in dessen Mikrorissen, adsorbiert. Das Harzfüllstoffgemisch wird in seinen Eigenschaften und seinem Reaktionsverhalten nicht negativ beeinflußt, wie dies der Fall wäre, wenn zur Erhöhung der Viskosität vorab der Monomer- oder Polymer-Anteil im Harzfüllstoffgemisch erhöht würde, was zu einer Verschlechterung der Oberfläche der erhaltenen Teile, wie Mattigkeit, und zur Blasenbildung beitragen würde; derartige negative Effekte sind aufgrund der vorteilhaften Ausgestaltungen bei dem erfindungsgemäßen Vorgehen in keiner Weise zu beobachten.

Durch das erfindungsgemäße Vorgehen wird eine vollständige und reproduzierbare Imprägnierung der später zugegebenen Verstärkungsfasern, wie Glasfasern, gewährleistet. Durch die niedrige Viskosität der erhaltenen Paste kann die Ausstoßleistung der Produktionsanlage hoch gewählt bzw. gehalten werden. Ein Ausschuß aufgrund von Imprägnierungsproblemen ist praktisch nicht feststellbar. Die Reaktivitäts- und Härtungscharakteristiken der herzustellenden Teile werden durch die Zugabe des Aktivierungsmittels in der erfindungsgemäßen Weise in keiner Weise beeinträchtigt oder verschlechtert. Die Bauteile werden vollständig ausgeführt. Eine Verarbeitung in Doppelwerkzeugen wird erleichtert. Verarbeitungsparameter wie Druck, Temperatur, Zuschnitt können konstant gehalten werden. Die vom Verarbeiter gestellten Anforderungen in bezug auf kurze Taktzeiten werden erfüllt.

Es können höhere Recyclatanteile verwendet werden, als dies bisher der Fall war. Hierdurch wird die Dichte der SMC-Masse und auch das Einsatzgewicht der hieraus hergestellten Bauteile durch die geringere Rohstoffdichte des Recyclats reduziert. Gewichtseinsparungen sind vor allem in der Automobilindustrie von großem Interesse.

Insgesamt ergeben sich im Vergleich zu SMC-Massen mit nicht vorbehandeltem Recyclat beim Einsatz von aktiviertem Recyclat eine Vielzahl von Vorteilen in der Herstellung und Verarbeitbarkeit. Diese Vorteile bleiben auch bei der Verwendung unterschiedlich hoher Recyclatanteile erhalten.

Bei einem konkreten Vergleichsversuch wurde bei einer mit Glasfasern mit einem Anteil von 50 Gewichts-% versetzten Gesamtmasse und einem Anteil an unbehandeltem Recyclat von 10 Gewichts-% bezogen auf die Gesamtmasse, also 20 % bezogen auf die SMC-Masse aus Harzfüllstoffgemisch und Recyclat, ausgegangen. Die in herkömmlicher Weise hergestellte Mischung enthielt ein Harzfüllstoffgemisch von 40 Gewichts-% (bezogen auf die Gesamtmasse) in Form eines Harzpastenansatzes. Der Harzpastenansatz von 40 Gewichts-%, bezogen auf die Gesamtmasse, setzte sich wie folgt zusammen:

| | |
|---|---|
| UP-Harz | 100 Gewichts-Teile |
| Monomer | 10 Gewichts-Teile |
| Härter | 1.7 Gewichts-Teile |
| Inhibitor | 1.2 Gewichts-Teile |
| Trennmittel | 4 Gewichts-Teile |
| Farbpaste | 3 Gewichts-Teile |
| Eindickpaste | 4 Gewichts-Teile |
| Füllstoff | 7.1 Gewichts-Teile |
| Additiv | 1.1 Gewichts-Teile. |

Hierzu kamen dann 33 Gewichts-Teile an unbehandeltem Recyclat, das sind 10 Gewichts-% bezogen auf die Gesamtmasse.

Beim erfindungsgemäßen Vorgehen wurde zunächst der genannte Recyclatanteil von 10 Gewichts-%, bezogen auf die Gesamtmasse SMC, mit dem Benetzungs- und Aktivierungsmittel Styrol sowie einem organischen Peroxid als Härter und p-Benzochinon als Inhibitor versehen. Die Zusammensetzung des aktivierten Recyclats war dabei wie folgt:

| | |
|---|---|
| Recyclat | 33,5 Gewichts-Teile |
| Monomer (Styrol) | 12,7 Gewichts-Teile |
| Härter (organisches Peroxid) | 0.24 Gewichts-Teile |
| Inhibitor (p-Benzochinon) | 0.06 Gewichts-Teile. |

Der beim erfindungsgemäßen Vorgehen verwendete Harzpastenansatz setzte sich wie folgt zusammen:

| | |
|---|---|
| UP-Harz | 100 Gewichts-Teile |
| Härter | 1.7 Gewichts-Teile |
| Inhibitor | 1.2 Gewichts-Teile |
| Trennmittel | 4 Gewichts-Teile |
| Farbpaste | 3 Gewichts-Teile |
| Eindickpaste | 4 Gewichts-Teile |
| Füllstoff | 7.1 Gewichts-Teile. |

Der Glasfaseranteil betrug bei der Gesamtmasse wiederum 50 Gewichts-%.

Bei den für die Harzpastenansätze jeweils verwendeten Rohstoffen handelt es sich beim Monomer um Styrol. Der Härter ist ein organisches Peroxid und dient zur Vernetzung bzw. Aushärtung des UP-Harzes. Beim Inhibitor handelt es sich um ein p-Benzochinon zur Einstellung des gewünschten Härtungsverlaufes sowie der Lagerstabilität des SMCs.

Die Eindickpaste auf der Basis von Erdalkalioxid erhöht die Viskosität des SMCs nach der Fertigung. Auf diese Weise wird ein verarbeitbarer plastischer Zustand des SMCs erreicht. Als Trennmittel wird ein Fettsäuresalz verwendet. Dies dient dann als Entformungshilfe beim Verarbeiten (Pressen) des SMCs. Als Füllstoff wird Kreide (Calciumcarbonat) verwendet. Beim Additiv handelt es sich um einen Viskositätsreduzierer.

Bei beiden Ausführungsbeispielen wies das verwendete Recyclat eine Körnung von weniger als 80 µm auf. Wie aus der Zusammensetzung der beiden Harzpastenansätze ersichtlich ist, war bei der Herstellung des Ansatzes beim erfindungsgemäßen Vorgehen kein Monomer sowie kein Additiv mehr notwendig.

Beim Vergleich der Gewichtsanteile von Harzfüllstoffgemisch und Recyclat, einmal unbehandelt, einmal aktiviert, ergibt sich, daß beim erfindungsgemäßen Vorgehen der genannte Anteil an unbehandeltem Recyclat von 10 Gewichts% bezogen auf die Gesamtmasse mit den Benetzungs- und Aktivierungsmitteln mit einem entsprechend am Gesamtgewicht gegebenen Gewichtsanteil von 4 % versehen und anschließend das derart aktivierte Recyclat mit einem, bezogen auf die Gesamtmasse einschließlich Glasgehalt von 50 Gewichts-%, Anteil der Harzfüllstoffgemischpaste von 36 % vermischt wurde.

Die verwendeten Aktivierungsmittel aus Monomer, Härter und Inhibitor betrugen dabei 75 Volumenanteile auf 100 Volumenanteile Recyclat.

Aufgrund des geringeren spezifischen Gewichts des Recyclatanteils betrug dieser 9,4 Volumen-%, während der Volumenanteil des Glases 35 Volumen-% entsprach.

Das aktivierte Recyclat selbst wurde durch Mischen von 72 Gewichts-% Recyclat mit 28 Gewichts-% Aktivierungsmittel erhalten.

Bei diesen konkreten Vergleichsbeispielen ergab sich im Vergleich zum SMC mit nicht vorbehandeltem Recyclat eine geringere Viskosität der erfindungsgemäß hergestellten Masse, eine bessere Imprägnierung der Glasfasern, ein besseres Fließverhalten und damit eine bessere Ausformung der Bauteile mit weniger Oberflächenfehlern und insgesamt einer geringeren Ausschußquote.

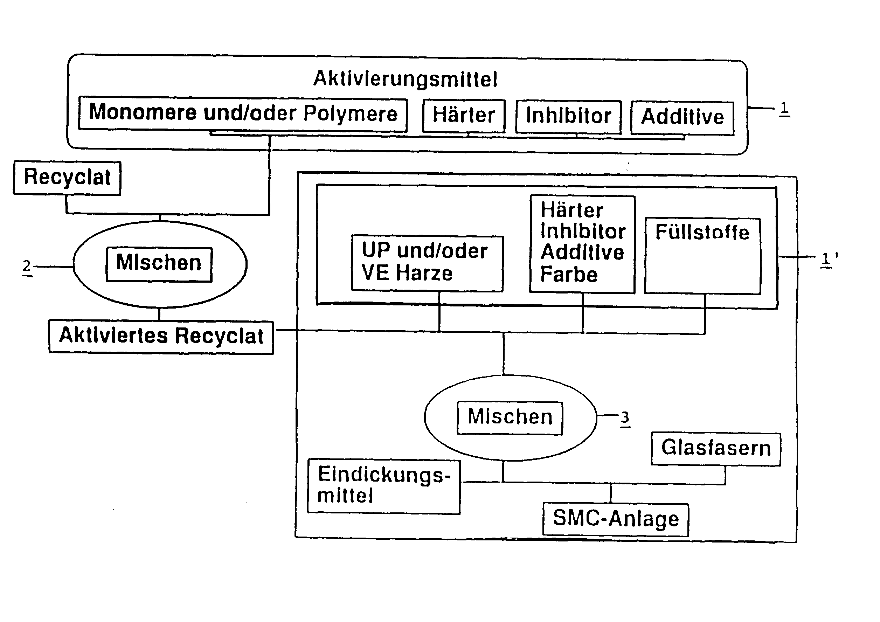

Weitere Vorteile und Merkmale der Erfindung ergeben sich aus den Ansprüchen und aus der nachfolgenden Beschreibung, in der das erfindungsgemäße Verfahren unter Bezugnahme auf die Zeichnung im einzelnen erläutert ist. Dabei zeigt die einzige Figur ein Ablaufdiagramm des erfindungsgemäßen Verfahrens.

Dabei wird in einem ersten Verfahrensschritt 1 aus Monomeren und/oder Polymeren sowie Härtern, Inhibitoren und Additiven ein Aktivierungsmittel erhalten. Dieses wird dann in einem zweiten Verfahrensschritt 2 mit dem unbehandelten Recyclat vermischt, indem das Recyclat durch die Aktivierungsmittel benetzt wird. Durch die Benetzung werden alle von außen zugänglichen Mikrorisse der Recyclatpartikel mit dem Aktivierungsmittel gefüllt. Dabei wird nur soviel Aktivierungsmittel im zweiten Verfahrensschritt 2 zugegeben, daß die Rieselfähigkeit des benetzten Recyclats erhalten bleibt.

In einem weiteren Verfahrensschritt 1', der zum ersten Verfahrensschritt 1 parallel ablaufen kann, werden UP-und/oder VE-Harze mit Härtern, Inhibitoren, Additiven, Farbe und Füllstoffen zu einem Harzfüllstoffgemisch bzw. einer Harzpaste vermischt. Dieses Harzfüllstoffgemisch wird dann mit dem aktivierten Recyclat in einem vierten Verfahrensschritt 3 vermischt. Die auf diese Weise hergestellte SMC-Formmasse wird dann zur Weiterverarbeitung mit Eindickungsmitteln sowie Glasfasern zur Verstärkung versetzt. Die daraus resultierende SMC-Masse wird dann zur Weiterverarbeitung einer SMC-Anlage zugeführt, mittels derer faserverstärkte Duroplastteile hergestellt werden können.

## Patentansprüche

1. Verfahren zum Herstellen einer SMC-Formmasse, die zur Weiterverarbeitung mit Verstärkungsfasern, wie Glasfasern, sowie Eindickungsmitteln versetzt wird, unter Verwendung von Recyclat, wobei Recyclat in ein Harzfüllstoffgemisch aus bei der SMC-/BMC-Herstellung üblichen Harzen, Füllstoffen und Additiven eingemischt wird und vor dem Zusammenmischen sämtlicher Komponenten das Recyclat separat durch Aktivierungsmittel aus mit dem Harz kompatiblen Mono- und/oder Polymeren sowie Additiven benetzt wird, dadurch gekennzeichnet, daß das Recyclat benetzt wird, bis alle von außen zugänglichen Mikrorisse der Recyclatpartikel mit dem Aktivierungsmittel gefüllt sind, und nur soviel Aktivierungsmittel zugegeben wird, daß die Rieselfähigkeit des benetzten Recyclats erhalten bleibt.

2. Verfahren nach einem der vorangehenden Ansprüche, dadurch gekennzeichnet, daß auf 100 Volumenteile Recyclat 5 bis 150 Volumenteile Aktivierungsmittel zugegeben werden.

3. Verfahren nach einem der vorangehenden Ansprüche, dadurch gekennzeichnet, daß auf 100 Volumenteile Recyclat zwischen 50 und 100 Volumenteile Aktivierungsmittel zugegeben werden.

4. Verfahren nach einem der vorangehenden Ansprüche, dadurch gekennzeichnet, daß Recyclate mit Partikelgrößen von weniger als 0,25 mm eingesetzt werden.

5. Verfahren nach einem der vorangehenden Ansprüche, dadurch gekennzeichnet, daß der Recyclatanteil an der SMC-Masse mindestens 5 Gewichts-% beträgt.

6. Verfahren nach einem der vorangehenden Ansprüche, dadurch gekennzeichnet, daß der Recyclatanteil an der SMC-Masse mindestens 20 Gewichts-% beträgt.

7. Verfahren nach einem der vorangehenden Ansprüche, dadurch gekennzeichnet, daß der Recyclatanteil an der SMC-Masse bis zu 60 Gewichts-% beträgt.

8. Verfahren nach einem der vorangehenden Ansprüche, dadurch gekennzeichnet, daß als Aktivierungshauptbestandteil Monomere wie insbesondere Styrol verwendet werden.

9. Verfahren nach einem der vorangehenden Ansprüche, dadurch gekennzeichnet, daß auf 100 Volumenteile Recyclat nicht mehr als 75 Volumenteile Aktivierungsmittel zugegeben werden.

## Claims

1. Process for producing a sheet moulding compound (SMC) which, for further processing, is mixed with reinforcing fibres, such as glass fibres, as well as thickeners, accompanied by the use of recyclate, the recyclate being mixed into a resin filler mixture of conventional resins, fillers and additives used in SMC/BMC production and prior to the blending of all the components the recyclate is separately wetted by activating agents of resin-compatible monomers and/or polymers, as well as additives, characterized in that the recyclate is wetted until all microcracks of the recyclate particles accessible from the outside are filled with activating agent and only sufficient activating agent to maintain the free-flowability of the wetted recyclate is added.

2. Process according to one of the preceding claims, characterized in that for 100 parts by volume of recyclate 5 to 150 parts by volume of activating agent are added.

3. Process according to one of the preceding claims, characterized in that for 100 parts by volume of recyclate between 50 and 100 parts by volume of activating agent are added.

4. Process according to one of the preceding claims, characterized in that recyclates with particle sizes below 0.25 mm are used.

5. Process according to one of the preceding claims, characterized in that the recyclate proportion of the SMC is at least 5 wt.%.

6. Process according to one of the preceding claims, characterized in that the recyclate proportion of the SMC is at least 20 wt.%.

7. Process according to one of the preceding claims, characterized in that the recyclate proportion of the SMC is up to 60 wt.%.

8. Process according to one of the preceding claims, characterized in that monomers, such as in particular styrene, are used as the main activating component.

9. Process according to one of the preceding claims, characterized in that for 100 parts by volume of recyclate no more than 75 parts by volume of activating agent are added.

## Revendications

1. Procédé de fabrication d'une composition de moulage en forme de feuille (S.M.C.), qu'on mélange à des fibres de renforcement telles que les fibres de verre ainsi qu'à des matières épaississantes en vue de son traitement ultérieur, en utilisant du recyclat, procédé dans lequel on mélange du recyclat dans un mélange de résine et de charge composé des résines, charges et adjuvants habituellement utilisés pour la fabrication de SMC/BMC, et dans lequel, avant d'effectuer le mélange de l'ensemble des composants, on imprègne séparément le recyclat d'un activateur composé de monomères et/ou de polymères compatibles avec la résine ainsi que d'adjuvants, caractérisé en ce que l'on imprègne le recyclat jusqu'à ce que toutes les microfissures accessibles de l'extérieur des particules de recyclat soient remplies d'activateur, et en ce que l'on n'ajoute que la quantité d'activateur nécessaire à maintenir l'aptitude à s'écouler du recyclat imprégné.

2. Procédé selon la revendication 1, caractérisé en ce que pour 100 volumes de recyclat, on ajoute 5 à 150 volumes d'activateur.

3. Procédé selon l'une quelconque des revendications précédentes, caractérisé en ce que pour 100 volumes de recyclat, on ajoute entre 50 et 100 volumes d'activateur.

4. Procédé selon l'une quelconque des revendications précédentes, caractérisé en ce que l'on utilise des recyclats à tailles de particules inférieures à 0,25 mm.

5. Procédé selon l'une quelconque des revendications précédentes, caractérisé en ce que la part du recyclat dans la composition de moulage représente au moins 5 % du poids.

6. Procédé selon l'une quelconque des revendications précédentes, caractérisé en ce que la part du recyclat dans la composition de moulage représente au moins 20 % du poids.

7. Procédé selon l'une quelconque des revendications précédentes, caractérisé en ce que la part de recyclat dans la composition de moulage représente jusqu'à 60 % du poids.

8. Procédé selon l'une quelconque des revendications précédentes, caractérisé en ce que l'on utilise des monomères tels qu'en particulier le styrol, en tant que composant essentiel de l'activateur.

9. Procédé selon l'une quelconque des revendications précédentes, caractérisé en ce que pour 100 volumes de recyclat on n'ajoute pas plus de 75 volumes d'activateur.
